# EUROPÄISCHE PATENTSCHRIFT

(11) **EP 2 388 207 B1**
(45) Veröffentlichungstag und Bekanntmachung des Hinweises auf die Patenterteilung: **29.08.2012**
(21) Anmeldenummer: 11177802.3
(22) Anmeldetag: 30.03.2010
(51) Int. Cl.: B65D 77/04, B29C 45/16, B29C 45/00

(54) **Entnahmearmatur mit einem Armaturengehäuse aus Kunststoff für Transport- und Lagerbehälter für Flüssigkeiten**
Removal fitting with a fitting casing made of plastic for transport and storage containers for liquids
Armature de prélèvement dotée d'un boîtier d'armature en plastique pour récipients de transport et de stockage pour liquides

(30) Priorität: 04.04.2009 DE 102009016451
(43) Veröffentlichungstag der Anmeldung: 23.11.2011
(62) Teilanmeldung aus: 10158482.9
(73) Patentinhaber: Protechna S.A., 1701 Fribourg (CH)
(72) Erfinder:
(74) Vertreter: advotec.

(56) Entgegenhaltungen:
- EP-A1- 1 319 608
- EP-A1- 2 008 946
- EP-A1- 2 157 028
- EP-A2- 0 949 159

## Beschreibung

Die Erfindung betrifft eine Entnahmearmatur mit einem Armaturengehäuse aus Kunststoff, insbesondere einen Klappen- oder Kugelhahn, für Transport- und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder einem zumindest teilweise elektrisch leitenden Kunststoffmaterial zum Abstützen des Innenbehälters ausgestattet sind.

Bei einem in der DE 198 15 082 A1 beschriebenen Transport- und Lagerbehälter für Flüssigkeiten ist in der am Auslaufstutzen des Innenbehälters angebrachten Entnahmearmatur der gattungsgemäßen Art ein Erdungsteil angeordnet, das als ein gekrümmtes Blech oder Plättchen aus Metall ausgebildet ist, das sich über einen Teilbereich der Innenbohrung der Entnahmearmatur erstreckt und über eine Befestigungsschraube und ein Erdungskabel an das Untergestell des Behälters angeschlossen ist.

Diese Entnahmearmatur hat folgende Nachteile:
Durch die zur Anbringung des Blechs oder Plättchens aus Metall in dem Armaturengehäuse aus Kunststoff erforderliche Befestigungsschraube, die durch die Gehäusewand geschraubt wird, ist die Dichtheit der Armatur nicht gewährleistet. Bei Transport- und Lagerbehältern für bestimmte flüssige Lebensmittel ist die Verwendung von Metallteilen nicht zulässig und infolgedessen sind mit dieser Armatur ausgerüstete Behälter für derartige flüssige Lebensmittel nicht verwendbar. Schließlich besteht bei dem bekannten Flüssigkeitsbehälter die Gefahr, dass beim Transport und der Lagerung von aggressiven Flüssigkeiten das Erdungsteil von der Flüssigkeit derart beschädigt wird, dass die elektrische Erdung nicht mehr funktionstüchtig ist.

Ferner sind für Flüssigkeitsbehälter bestimmte Entnahmearmaturen mit einem antistatisch ausgerüsteten Gehäuse bekannt, die für ein Massenprodukt jedoch zu teuer sind.

Die EP 0 949 159 A2 beschreibt eine Entnahmearmatur mit einem Armaturengehäuse aus Kunststoff für Transport- und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder aus einem elektrisch leitenden Kunststoff zum Abstützen des Innenbehälters ausgestattet sind. Das Armaturengehäuse der Entnahmearmatur ist mit einem flexiblen Erdungskabel versehen, das zur Verbindung mit dem palettenartigen Untergestell des Innenbehälters dient und elektrische Ladungen vom Innenbehälter ableiten soll.

Der Erfindung liegt die Aufgabe zugrunde, die gattungsgemäße Entnahmearmatur für Transport- und Lagerbehälter für Flüssigkeiten im Hinblick auf eine sichere und umfassende Erdung zur Ableitung der sich beim Befüllen mit Flüssigkeiten und bei der Entnahme von Flüssigkeiten aufgrund von Flüssigkeitsreibung bildenden elektrischen Ladungen und eine preisgünstige Herstellung weiterzuentwickeln.

Diese Aufgabe wird erfindungsgemäß gelöst durch die Entnahmearmaturen für Transport- und Lagerbehälter für Flüssigkeiten nach Patentanspruch 1.

Die erfindungsgemäßen Entnahmearmaturen, deren Gehäuse mit einem Anschlussflansch aus Kunststoff zum Anschweißen des Gehäuses an den Entleerstutzen des Kunststoffinnenbehälters eines mit einem Außenmantel aus Metallgitter oder Blech und mit einem palettenartigen Untergestell aus elektrisch leitendem Material ausgerüsteten Transport- und Lagerbehälters für Flüssigkeiten ausgestattet ist, ermöglichen eine sichere elektrische Erdung der bei der Entleerung aus dem Innenbehälter auslaufenden Flüssigkeit über einen elektrischen Erdungsleiter, der den aus einem elektrisch leitenden Kunststoffmaterial hergestellten Anschlussflansch mit dem Untergestell oder dem Außenmantel verbindet. Die Entnahmearmatur mit einem Anschlussflansch aus elektrisch leitendem Kunststoffmaterial, der über ein Erdungskabel an das Untergestell oder den Außenmantel des Transport- und Lagerbehälters angeschlossen ist, ist wesentlich preisgünstiger als die Entnahmearmaturen nach dem Stand der Technik, deren gesamtes Kunststoffgehäuse antistatisch ausgerüstet ist.

Die Erfindung ist nachstehend anhand von Zeichnungsfiguren erläutert, die folgendes darstellen:
- Fig. 1: eine perspektivische Darstellung eines Transport-und Lagerbehälters für Flüssigkeiten,

- Fig. 2: eine perspektivische, teilweise aufgebrochene, vergrößerte Darstellung der mit einem Anschlussflansch an dem Entleerstutzen des Innenbehälters des Transport- und Lagerbehälters angeschweißten Entnahmearmatur,
- Fig. 3: eine perspektivische, vergrößerte Darstellung eines nach der 2K-Technologie in der ersten Stufe spritzgegossenen Anschlussflansches der Entnahmearmatur,
- Fig. 4: eine perspektivische, vergrößerte Darstellung des nach der 2K-Technologie in der zweiten Stufe mit einem Erdungsleiter spritzgegossenen Anschlussflansches der Entnahmearmatur,
- Fig. 5: die Stirnansicht des Anschlussflansches der Entnahmearmatur nach Fig. 4,
- Fig. 6: eine vergrößerte, perspektivische Darstellung des Auslaufbereichs des Transport- und Lagerbehälters mit der Entnahmearmatur,
- Fig. 7: eine perspektivische Darstellung eines einteilig mit einem Erdungskabel spritzgegossenen Anschlussflansches aus einem elektrisch leitfähigen Kunststoffmaterial und
- Fig. 8: die Stirnansicht des Anschlussflansches nach Fig. 7.

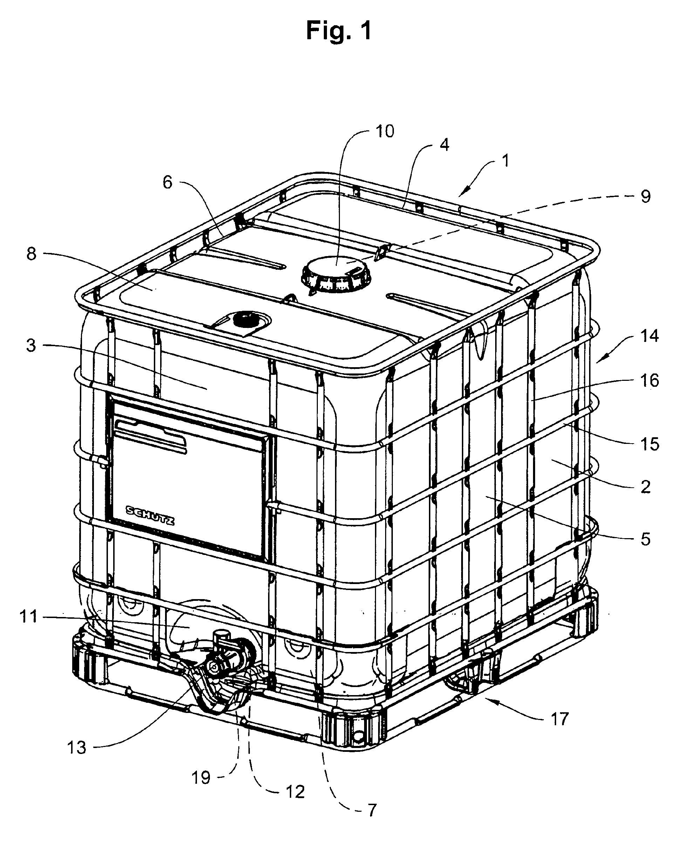

Der als Einweg- und Mehrwegbehälter einsetzbare Transport- und Lagerbehälter 1 für Flüssigkeiten nach Fig. 1 weist als Hauptbauteile einen austauschbaren, quaderförmigen Innenbehälter 2 aus Kunststoff auf mit einer Stirnwand 3, einer Rückwand 4 und zwei Seitenwänden 5,6, einem unteren als Ablaufboden ausgebildeten Boden 7 und einem oberen Boden 8, einem an diesen angeformten, mit einem Deckel 10 verschließbaren Einfüllstutzen 9 und einem an einer Einwölbung 11 im unteren Abschnitt der Stirnwand 3 des Innenbehälters angeformten Entleerstutzen 12, der mit dem Innenbehälter 2 einteilig durch Blasformen hergestellt ist, zur Anbringung einer Entnahmearmatur 13, insbesondere eines Kugel- oder Klappenhahns, ferner einen als Gittermantel ausgebildeten Außenmantel 14 mit sich kreuzenden horizontalen und vertikalen Gitterstäben 15,16 aus Metall zur Aufnahme des Innenbehälters 2 sowie ein palettenartiges Untergestell 17 mit euronormgerechten Längen- und Breitenabmessungen zur Abstützung des Innenbehälters 2.

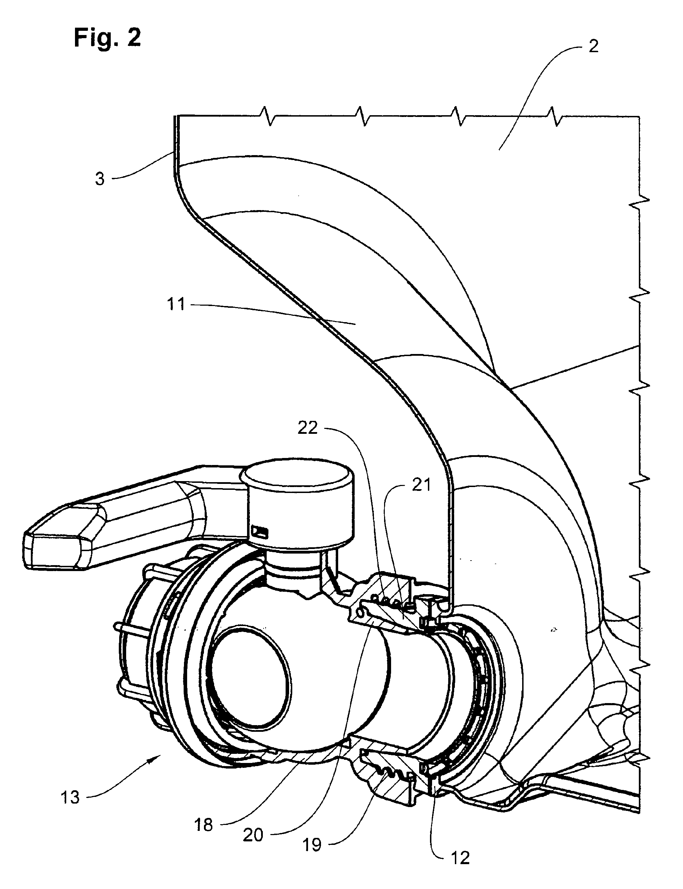

Das aus einem Polyethylen hoher Dichte (PE-HD) spritzgegossene Armaturengehäuse 18 der Entnahmearmatur 13 ist mit dem mit einem Innengewinde 19 versehenen Einlaufstutzen 20 auf einen ein entsprechendes Außengewinde 22 aufweisenden Anschlussflansch 21 aufgeschraubt und gegen diesen abgedichtet und der Anschlussflansch 21 ist zusammen mit der aufgeschraubten Entnahmearmatur 13 vorzugsweise durch Spiegelschweißen an dem Entleerstutzen 12 des Innenbehälters 2 angebracht. Der Anschlussflansch 21 ist als Spritzgussteil aus einem nichtleitenden Kunststoff, zum Beispiel Polyethylen, gefertigt (Fig. 2).

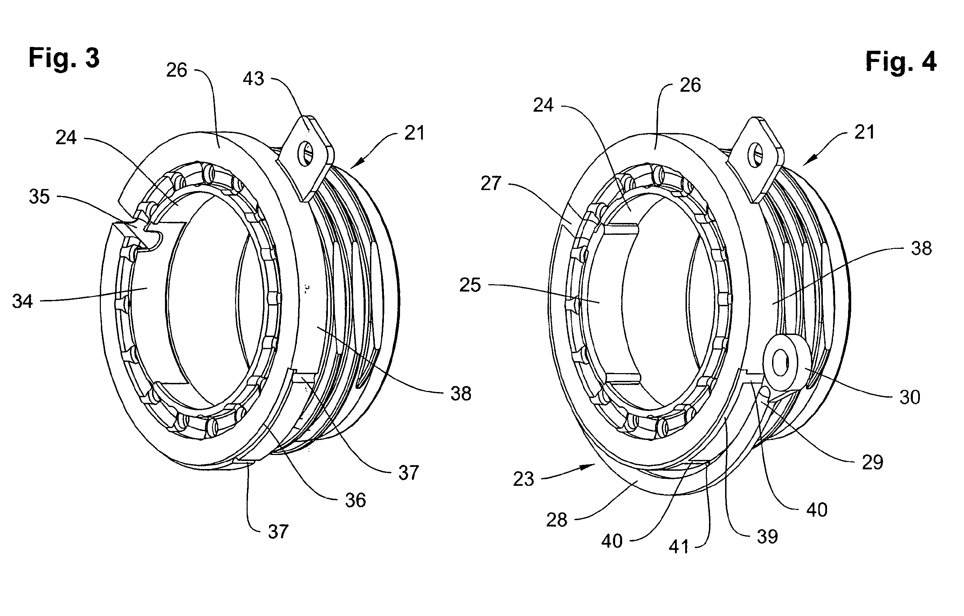

Die Entnahmearmatur 13 ist mit einer elektrischen Erdung durch einen in den Figuren 3 bis 5 dargestellten, einteilig ausgebildeten Erdungsleiter 23 aus einem elektrisch leitenden Kunststoff, beispielsweise Polyethylen mit Nanopartikeln, ausgestattet, der ein in die Innenwand 24 des Anschlussflansches 21 integriertes Ringsegment 25, einen in den Flanschring 26 des Anschlussflansches eingelassenen Verbindungssteg 27 sowie ein flexibles Kabel 28 zur elektrischen Verbindung des Anschlussflansches 21 des Armaturengehäuses 18 mit dem Untergestell 17 oder dem Außenmantel 14 des Transport- und Lagerbehälters 1 aufweist.

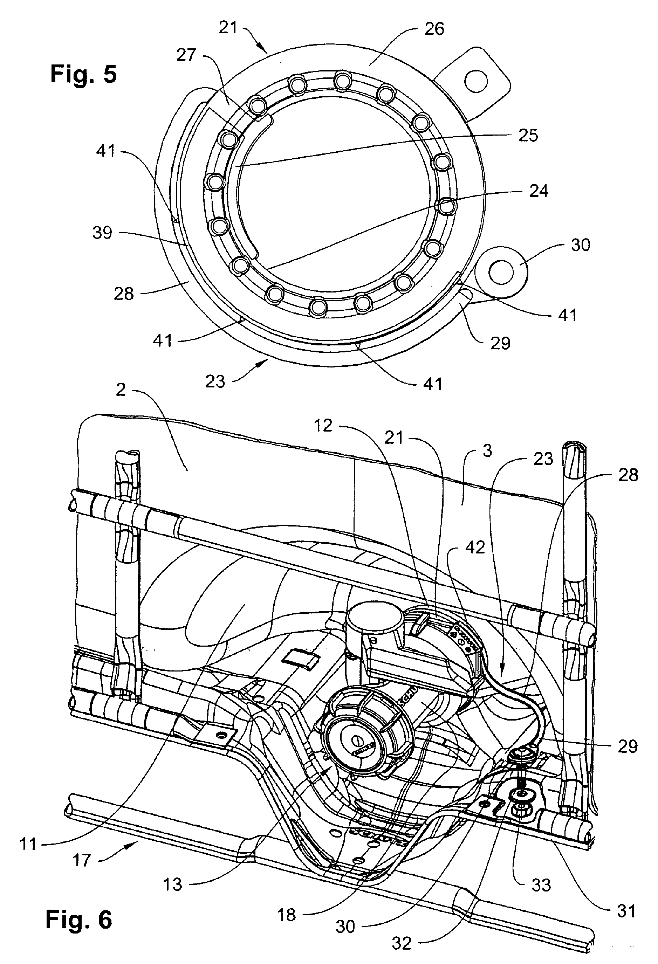

Gemäß Fig. 6 wird der Erdungsleiter 23 des Anschlussflansches 21 des Armaturengehäuses 18 mit einer am freien Ende 29 des Kabels 28 ausgebildeten Lasche 30 an dem Blechboden 31 des Untergestells 17 des Transport- und Lagerbehälters 1 mittels einer Schraube 32 und einer Mutter 33 festgeschraubt.

Der in den Figuren 3 bis 5 dargestellte Anschlussflansch 21 und der mit diesem einteilig ausgebildete Erdungsleiter 23 werden nach der 2K-Technologie mit einer Spritzgießmaschine hergestellt.

Zunächst wird in einem ersten Verfahrensschritt der Anschlussflansch 21 mit einer Aussparung 34 in der Innenwand 24 desselben für das Ringsegment 25 des Erdungsleiters 23, einer Nut 35 in dem Flanschring 26 des Anschlussflansches 21 für den Verbindungssteg 27 des Erdungsleiters 23 sowie einer ringsegmentförmigen Aussparung 36 und an diese anschließenden Nuten 37 in dem Außenrand 38 des Flanschringes 26 für einen Haltering 39 mit Haltestegen 40 und Abreißspitzen 41 für das Kabel 28 des Erdungsleiters 23 aus einem elektrisch nichtleitenden Kunststoffmaterial, beispielsweise einem Polyethylen hoher Dichte (PE-HD), spritzgegossen (Figur 3). Anschließend wird mit der gleichen Spritzgießmaschine in einem zweiten Verfahrensschritt ein elektrisch leitendes Kunststoffmaterial, beispielsweise Polyethylen mit Nanopartikeln, zur Herstellung des Erdungsleiters mit dem Ringsegment 25, dem Verbindungssteg 27 und dem Kabel 28 auf den vorgefertigten Anschlussflansch 21 aufgespritzt (Figuren 4 und 5). Nach dem Anschweißen des Anschlussflansches 21 mit dem auf diesen aufgeschraubten Armaturengehäuses 18 an den Entleerstutzen 12 des Innenbehälters 2 des Transport- und Lagerbehälters 1 wird das flexible Kabel 28 des Erdungsleiters 23 von den Abreißspitzen 41 der Haltestege 40 des Halterings 39 am Außenrand 38 des Flanschringes 26 des Anschlussflansches 21 abgetrennt.

Das in die Innenwand 24 des Anschlussflansches 21 integrierte Ringsegment 25 und die Befestigungslasche 30 am freien Ende 29 des Kabels 28 des Erdungsleiters 23 des Anschlussflansches 21 der Entnahmearmatur 13 werden mit einem Übermaß spritzgegossen und anschließend zur Verbesserung der elektrischen Leitfähigkeit abgeschält.

Das Armaturengehäuse 18 und der Anschlussflansch 21 sind durch eine Originalitätssicherung miteinander verbunden, die durch einen Sicherungsclip 42 gebildet wird, der eine an den Flanschring 26 des Anschlussflansches 21 angespritzte Lasche 43 und eine entsprechende nicht dargestellte Lasche am Armaturengehäuse 18 miteinander verbindet (Figuren 3 und 6).

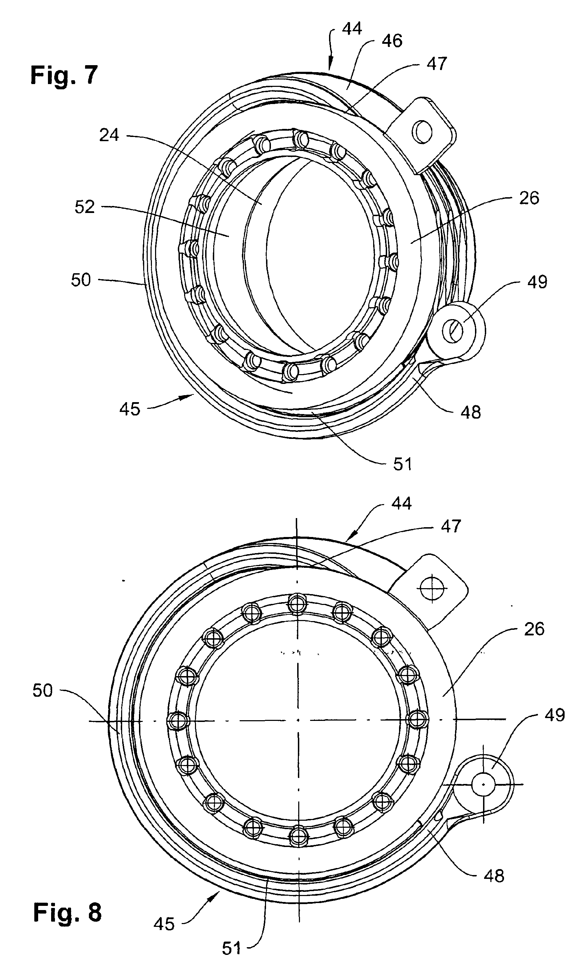

Ein weiterer in den Figuren 7 und 8 dargestellter, als Gewindeflansch ausgebildeter Anschlussflansch 44, auf den gemäß Figur 2 das Armaturengehäuse 18 mit dem Einlaufstutzen 20 aufgeschraubt und mit dem das Armaturengehäuse 18 an den Entleerstutzen 12 des Innenbehälters 2 angeschweißt wird, ist einteilig mit einem begrenzt flexiblen Erdungskabel 45 aus einem elektrisch leitenden Kunststoffmaterial, beispielsweise einem Polyethylen hoher Dichte (PE-HD) mit Nanopartikeln, spritzgegossen.

Das eine Ende 46 des Erdungskabels 45 ist durch einen Übergang 47 an dem Flanschring 26 des Anschlussflansches 44 angebunden, und das andere Ende 48 des Erdungskabels 45 weist eine Befestigungslasche 49 zur Anbringung am Untergestell 17 oder Außenmantel 14 des Transport- und Lagerbehälters 1 auf.

Der Kabelabschnitt 50 zwischen der Anbindung 47 und der Befestigungslasche 49 ist durch einen Abreißfilm 51 an den Flanschring 26 des Anschlussflansches 44 angebunden, derart, dass nach dem Anschweißen des Anschlussflansches 44 mit der Entnahmearmatur 13 an den Entleerstutzen 12 des Innenbehälters 2 der Kabelabschnitt 50 des Erdungskabels 45 zwischen Übergang 47 und Befestigungslasche 49 zur Anbringung des Kabels 45 mit der Befestigungslasche 49 an dem Untergestell 17 oder dem Außenmantel 14 des Transport- und Lagerbehälters 1 von dem Flanschring 26 des Anschlussflansches 44 abreißbar ist.

Ein zylindrischer Abschnitt 52 der Innenwand 24 des Anschlussflansches 21 ist zur Verbesserung der elektrischen Leitfähigkeit des Anschlussflansches angeschält.

## Patentansprüche

1. Entnahmearmatur mit einem Armaturengehäuse aus Kunststoff, insbesondere Klappen- oder Kugelhahn, für Transport- und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder einem zumindest teilweise elektrisch leitenden Kunststoffmaterial zum Abstützen des Innenbehälters ausgestattet sind, und mit einem an das Armaturengehäuse angeschlossenen flexiblen Erdungskabel, **gekennzeichnet durch** einen als Gewindeflansch ausgebildeten Anschlussflansch (44) aus einem elektrisch leitenden Kunststoffmaterial, auf den das Armaturengehäuse (18) mit dem Einlaufstutzen (20) aufgeschraubt und mit dem das Armaturengehäuse (18) an den Entleerstutzen (12) des Innenbehälters (2) angeschweißt wird, wobei das Erdungskabel (45) als ein einteilig mit dem Anschlussflansch (21) spritzgegossenes Erdungskabel ausgebildet ist, dessen eines Ende (46) **durch** einen Übergang (47) an den Flanschring (26) des Anschlussflansches (44) angebunden ist und dessen anderes Ende (48) eine Befestigungslasche (49) zur Anbringung am Untergestell (17) oder Außenmantel (14) des Transport- und Lagerbehälters (1) aufweist, wobei der Kabelabschnitt (50) zwischen dem Übergang (47) und der Befestigungslasche (49) **durch** einen Abreißfilm (51) an den Flanschring (26) des Anschlussflansches (44) angebunden ist, derart, dass nach dem Anschweißen des Anschlussflansches(44) mit der Entnahmearmatur (13) an den Entleerstutzen (12) des Innenbehälters (2) der Kabelabschnitt (50) des Erdungskabels (45) zwischen Übergang (47) und Befestigungslasche (49) zur Anbringung des Kabels (45) mit der Befestigungslasche (49) an dem Untergestell (17) oder dem Außenmantel (14) des Transport- und Lagerbehälters (1) von dem Flanschring (26) des Anschlussflansches (44) abreißbar ist.

## Claims

1. A removal fitting comprising a fitting housing made of plastic, in particular a flap or ball valve, for transport and storage containers for liquids, which are equipped with an inner container made of plastic comprising a closable filler neck and a discharge nozzle for connecting to the removal fitting, an outer jacket made of metal lattice or metal plate as well as a pallet-like base frame made of metal or an at least partially electrically conducting plastic material for supporting the inner container, and comprising a flexible ground cable, which is connected to the fitting housing, **characterized by** a coupling flange (44), which is embodied as a threaded flange, made of an electrically conducting plastic material, to which the fitting housing (18) is screwed with the inlet nozzle (20) and with which the fitting housing (18) is welded to the discharge nozzle (12) of the inner container (2), wherein the ground cable (45) is embodied as a ground cable, which is injection molded with the coupling flange (21) in one piece, the one end (46) of which is connected to the flange ring (26) of the coupling flange (44) by means of a transition (47) and the other end (48) of which encompasses a fastening lug (49) for attaching to the base frame (17) of outer jacket (14) of the transport and storage container (1), wherein the cable section (50) between the transition (47) and the fastening lug (49) is connected to the flange ring (26) of the coupling flange (44) by means of a tear-off film (51) such that the cable section (50) of the ground cable (45) can be torn off from the flange ring (26) of the coupling flange (44) between transition (47) and fastening lug (49) for attaching the cable (45) by means of the fastening lug (49) to the base frame (17) or the outer jacket (14) of the transport and storage container (1) after the coupling flange (44) with the removal fitting (13) has been welded to the discharge nozzle (12) of the inner container (2).

## Revendications

1. Robinetterie de soutirage avec un corps de robinet en matière plastique, notamment un robinet à clapet ou un robinet à boisseau sphérique, pour des conteneurs de transport et de stockage de liquides, qui sont équipés d'un conteneur intérieur en matière plastique avec une tubulure de remplissage fermable et une tubulure de vidange pour le raccord de la robinetterie de soutirage, d'une enveloppe extérieure en treillis métallique ou en tôle, ainsi que d'un châssis en métal ou en une matière plastique au moins en partie conductrice d'électricité et avec un câble flexible de mise à la terre raccordé sur le corps de robinet, **caractérisée par** une bride de raccordement (44) conçue en tant que bride filetée en une matière plastique conductrice d'électricité, sur laquelle on visse le corps de robinet (18) avec la tubulure d'entrée (20) et avec laquelle on soude le corps de robinet (18) sur la tubulure de vidange (12) du conteneur intérieur (2), le câble de mise à la terre (45) étant conçu en tant que câble de mise à la terre moulé par injection en monobloc avec la bride de raccordement (21), dont l'une des extrémités (46) est reliée par une jonction (47) au collet rapporté (26) de la bride de raccordement (44) et dont l'autre extrémité (48) comporte une patte de fixation (49) pour le montage sur le châssis (17) ou sur l'enveloppe extérieure (14) du conteneur de transport et de stockage (1), le tronçon de câble (50) entre la jonction (47) et la patte de fixation (49) étant relié par un film à arracher (51) au collet rapporté (26) de la bride de fixation (44) de telle sorte qu'après le soudage de la bride de raccordement (44) avec la robinetterie de soutirage (13) sur la tubulure de vidange (12) du conteneur intérieur (2), le tronçon de câble (50) du câble de mise à la terre (45) puisse être arraché du collet rapporté (26) de la bride de raccordement (44) entre la jonction (47) et la patte de fixation (49) pour le montage du câble (45) avec la patte de fixation (49) sur le châssis (17) ou sur l'enveloppe extérieure (14) du conteneur de transport et de stockage (1).
